(19) Europäisches Patentamt
European Patent Office
Office européen des brevets

(11) EP 4 212 477 A1

(12) EUROPEAN PATENT APPLICATION

(43) Date of publication:
**19.07.2023 Bulletin 2023/29**

(21) Application number: **22151236.1**

(22) Date of filing: **12.01.2022**

(51) International Patent Classification (IPC):
***C01B 21/06*** *(2006.01)* ***H01M 4/88*** *(2006.01)*
***H01M 4/90*** *(2006.01)* ***H01M 4/96*** *(2006.01)*
***H01M 14/00*** *(2006.01)*

(52) Cooperative Patent Classification (CPC):
**H01M 4/96; C01B 21/0605; H01M 4/885; H01M 4/9083; H01M 14/005**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Max-Planck-Gesellschaft zur Förderung der Wissenschaften e.V.
80539 München (DE)**

(72) Inventors:
- **LÖFFLER, Felix
14469 Potsdam (DE)**
- **ZHANG, Junfang
14476 Potsdam (DE)**
- **ZHU, Yuntao
14469 Potsdam (DE)**
- **SAVATIEIEV, Oleksandr
14476 Potsdam (DE)**

(74) Representative: **Deblon, Jörg-Stephan
Patentanwaltskanzlei Dr. Deblon
Alte Honrather Strasse 22
53797 Lohmar (DE)**

(54) **NOVEL CARBON NITRIDE COMPOSITIONS AND THEIR USE AS PHOTOELECTRODES**

(57) The present invention relates to novel carbon nitride compositions, photoelectrodes comprising the same as well as to a facile process for their preparation. The invention further encompasses the use of such photoelectrodes in broad variety of photocatalyzed reactions such as photoxidations.

**Fig 2:**

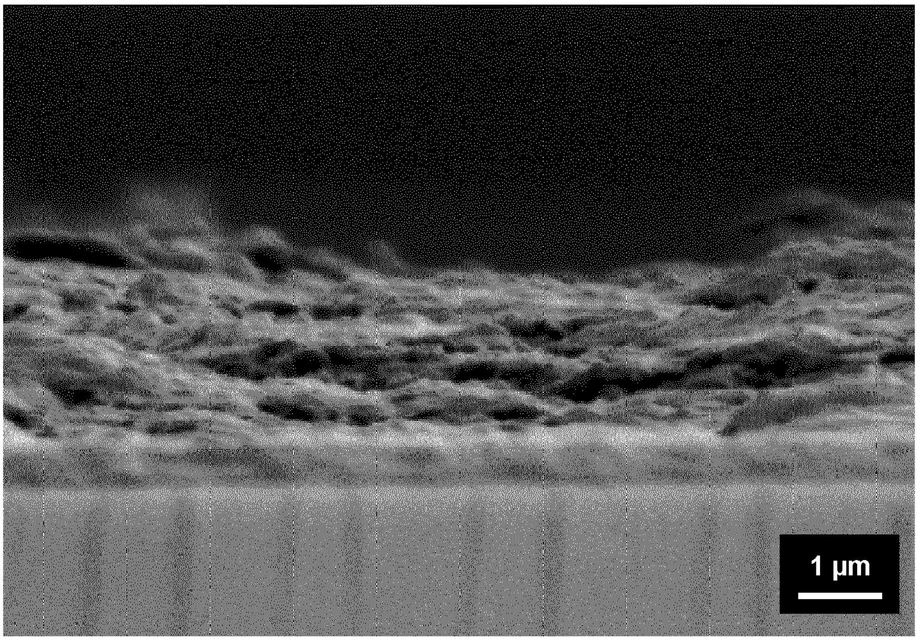




Processed by Luminess, 75001 PARIS (FR)

## Description

### Field of the Invention

The present invention relates to novel carbon nitride compositions, photoelectrodes comprising the same as well as to a facile process for their preparation. The invention further encompasses the use of such photoelectrodes in broad variety of photocatalyzed reactions such as photoxidations.

### Background

The utilization of sunlight for the direct coversion of solar energy into chemical fuels, in particular hydrogen has gained significant interest over the past decades. Typically, water splitting reactions in photoelectrochemical cells (PEC) serve as a model reaction for the development of suitable electrode materials. In such reactions the photogenerated electrons are transferred to the cathode for the hydrogen evolution reaction (HER), while the remaining holes at the anode oxidize water to give oxygen. The oxygen evolution reaction (OER), however, is kinetically unfavorable and requires high oxidation potential, which slows down the cathode reaction and limits the application of narrow-bandgap semiconductors. As a consequence recent investigations focused on alternatives to the anodic OER, such as alcohol oxidation and oxidative C-H functionalization. The generation of highly energetic electrons and holes on photoelectrodes at ambient temperature and pressure already revealed huge potential for organic transformation to yield value-added chemicals.

A major challenge in this area, however, is the preparation of photoelectrodes that can work effectively in non-aqueous media which are typically required for organic transformations. State-of-the-art photoanodes are mainly based on metal oxides, such as bismuth vanadate ($BiVO_4$), tungsten(VI)oxide ($WO_3$) and hematite ($\alpha$-$Fe_2O_3$). Under visible light irradiation, they can achieve conversion rates comparable to those of commercially available platinum or glassy carbon electrodes, even at lower applied potentials. Such materials, however show a high rate of photocorrosion in aqueous electrolytes and their PEC properties significantly decrease in non-aqueous electrolytes making their commercial application unlikely or unattractive.

Owing to their suitable electronic structure, tunable band gap, high stability, and low price polymeric carbon nitrides have emerged as a promising type of semiconductors in photoanodes for PECs.

In WO20180433829 A, 3-amino-1,2,4-triozole based mesoporous carbon nitrides are employed as photoanodes, WO2019/229255 A discloses carbon nitrides as catalysts for photodegradation of organic materials.

Despite their advantages and proven performance, to date, progress on the utilization of carbon nitrides as PEC photoanodes has been limited by the poor charge separation and fast recombination under illumination. However, several approaches to increase charge separation and electron mobility within the carbon nitride layer as well as hole extraction to the solution were reported.

J. Qin, J. Barrio, G. Peng, J. Tzadikov, L. Abisdris, M. Volokh, M. Shalom, Nature Communications 2020, 11, 4701, disclose the fabrication of multilayered carbon nitride films from thiourea on various substrates exhibiting improved optical absorption and charge separation as well as good performance as a photoanode in water-splitting PECs. The best carbon nitride photoanode demonstrated a photocurrent density of 353 $\mu A\ cm^{-2}$ and an external quantum yield value above 12% at 450 nm at 1.23 V versus Reversible Hydrogen Electrode (RHE) in an alkaline solution.

Carbon nitrides with improved electron diffusion length and good hole extraction properties by growing several ordered carbon nitride layers forming a type-II heterojunction on top of reduced graphene oxide (rGO) are described in N. Karjule, J. Barrio, L. D. Xing, M. Volokh, M. Shalom, Nano Lett. 2020, 20, 4618-4624. The resulting carbon nitride photoanode showed a current density of up to 270 $\mu A\ cm^{-2}$ in a 0.1 M KOH solution at 1.23 V vs RHE, a very low onset potential (-0.0012 V), and stability for up to 18 h.

Even though the above mentioned developments are encouraging there was still the need for improved carbon nitrides or compositions comprising the same suitable to form efficient photoelectrodes.

### Summary of the Invention

According to one aspect of the invention, there is now provided a carbon nitride composition comprising

1) a first layer comprising a carbon nitride with a band gap of 2.40 to 3.20 eV, preferably 2.40 to 2.90 eV and more preferably 2.40 to 2.80 eV and

2) a second layer comprising a carbon nitride with a band gap of of 1.50 to 2.10 eV, preferably 1.60 to 2.00 eV and more preferably 1.65 to 1.95 eV.

Another aspect the invention relates to a photoelectrode, in particular a photoanode comprising

A) a conductive substrate

B) carbon nitride composition according to the invention bound to the conductive substrate via the first layer

as well as to a photoelectrochemical cell comprising the same.

The invention further encompasses a process for the manufacture of the aforementioned carbon nitride compositions and photoelectrodes as well as to a process for the photoelectrochemical reaction of organic compounds using the carbon nitride compositions, photoelectrodes, in particular photoanodes or photoelectrochemical cells according to the invention.

**Brief description of the drawings**

Figure 1 shows a scanning electron microscope (SEM) picture (top view) of the carbon nitride composition prepared according to example 1c.

Figure 2 shows a scanning electron microscope (SEM) picture (cross sectional view) of the carbon nitride composition prepared according to example 1c.

Figure 3 shows a scanning electron microscope (SEM) picture (top view) of the carbon nitride composition prepared according to example 1c after mechanically scratching off the second layer so show the condensed morphology of the first layer.

Figure 4 shows IR spectra of (i) the coated substrate obtained in step b) of example 1c before performing step c), denominated PS-MCASC, (ii) a carbon nitride formed according to comparison example 2 i.e. without using a coated substrate, denominated CN and iii) the inventive carbon nitride composition according to the invention, denominated CN-HSC with highlighting the structural differences.

Figures 5 and 6 show the time-resolved carbon (figure 5) and nitrogen (figure 6) spectra measured at the surface i.e. the second layer of the carbon nitride composition according to example 1c upon 6 keV Ar-cluster (1000 atoms) sputtering for a duration of about 10 minutes.

Figure 7 shows a time resolved of the carbon / nitrogen atomic ratio measured at the surface i.e. the second layer of the carbon nitride composition according to example 1c upon 6 keV Ar-cluster (1000 atoms) sputtering for a duration of about 10 minutes.

Figure 8 shows UV/VIS spectra of the carbon nitride composition according to example 1c and a non-inventive carbon nitride prepared according to example 2.

Figure 9 shows the photon-to-current conversion efficiency (IPCE) at various wavelengths of the carbon nitride composition / photoelectrode according to example 1c and a non-inventive carbon nitride / photoelectrode prepared according to example 2. The bars indicate the range of 5 measurements at different light intensities.

Figure 10 shows the steady-state photoluminescence (PL) emission spectra of the carbon nitride composition / photoelectrode according to example 1c and a non-inventive carbon nitride / photoelectrode prepared according to example 2.

Figure 11 shows a time resolved transient photoluminescence decay spectrum measured at 530 nm for the carbon nitride composition / photoelectrode according to example 1c and a non-inventive carbon nitride / photoelectrode prepared according to example 2.

Figures 12 and 13 show linear sweep voltammetry (LSV) curves of the photoelectrode according to example 1c (figure 13) and the non-inventive carbon photoelectrode prepared according to example 2 (figure 12) in 0.1 M $Na_2SO_4$ with white light from a CHANZON 50 W LED Chip having a 6000 to 6500 K color temperature, 30-34V at 1500 mA and without light.

Figure 14 shows a Tauc Plot and graphical extrapolation to determine the band gaps of the second layer of the carbon nitride composition according to example 1c (denoted as kCN - solid line), the respective first layer (denoted as KCN scratched - dashed line) and the non-inventive carbon nitride prepared according to example 2 (denoted as CN - dotted line).

## Detailed description of the Invention

The invention also encompasses all combinations of all levels of preferred embodiments or parameter ranges as disclosed hereinafter either with each other or with the broadest disclosed parameter range or embodiment.
Whenever used herein the terms "including", "for example", "e.g.", "such as" and "like" are meant in the sense of "including but without being limited to" or "for example without limitation", respectively.

Carbon nitride compositions

As used herein the term "carbon nitride" generally denotes a material exhibiting at least two peaks for nitrogen at 398.0 ± 0.5 eV attributable to C=N-C bonds and 401.0 ± 0.5 eV attributable to $N\text{-}(C)_3$ bonds and four peaks for carbon at 285.0 ± 0.5 eV attributable to C-C bonds, 287.0 ± 0.5 eV attributable to $C\text{-}NH_{(2)}$ bonds as well as 288.0 ± 0.5 eV and 290.0 ± 0.5 eV both attributable to N=C-N bonds each as measured by x-ray photoelectron spectroscopy (XPS).
The different layers are defined by their band gaps. As used herein, the band gap denotes the band gap as measured in accordance with the experimental part.
In one embodiment the first layer of the inventive carbon nitride composition has a thickness of 2 to 800 nm, preferably 10 to 500 nm and more preferably 50 to 300 nm.
In another embodiment the second layer of the inventive carbon nitride composition has a thickness of 100 nm to 10.0 μm, preferably 500 nm to 10 μm and more preferably 1.0 μm to 5.0 μm.
In one embodiment the carbon/nitrogen ratio of the second layer after 5 min surface etching with 6 keV Ar-cluster (1000 atoms) sputtering is from 0.73 to 0.76.
In one embodiment the second layer comprises porous carbon nitride such as tubular or rod-shaped carbon nitride.
X-ray photoelectron spectroscopy (XPS), Argon cluster etching, band gap determination, UV-/VIS-Spectra, Photoluminescence decay times, Incident Photon-to-Current Conversion Efficiency (IPCE), compositions on atomic level and other methods applied to determine physical or chemical parameters of the carbon nitride compositions or photoelectrodes according to the invention are described in more detail in the experimental section and all ranges and values of such parameters disclosed in this application are given herein with reference thereto.
It is known to those skilled in art, that due to their insolubility in commonly used media and their preparation process which typically involves a high temperature thermolysis whereby organic precursors are condensed and/or decomposed and/or rearranged, the inventive carbon nitride compositions depending on the preparation conditions and precursors may have different properties such as those mentioned above.
It is known to those skilled in art, that due to their insolubility in commonly used media and their preparation process which typically involves a high temperature thermolysis whereby organic precursors are condensed and/or decomposed and/or rearranged, carbon nitrides in general and the inventive carbon nitride compositions in particular may have different properties such as band gap, fluorescence lifetime, crystallinity and defects in crystal structure, elemental composition, UV adsorption depending on the preparation conditions and precursors.
Further, in particular the end groups may undergo oxidation or hydrolysis when in contact with air and/or humidity. Therefore the inventive carbon nitride compositions may also have a small content of oxygen e.g.stemming from hydroxyl or carbonyl groups.
Therefore, the claimed compositions may alternatively or additionally also be specified by their preparation process.
In one embodiment the inventive carbon nitride compositions are prepared by a process comprising at least the steps of

a) providing a starting material comprising

i) at least one carbon nitride precursor material and

ii) at least one polymer and

iii) a diluent

b) coating a substrate, preferably a conductive substrate with the starting material and removing the diluent to obtain a coated substrate

c) exposing the coated substrate obtained in step b) to vapours of at least one carbon nitride precursor material and a temperature of 400°C to 700°C, preferably 450°C to 650°C and more preferably 500°C to 600°C under substantial exclusion of oxygen.

In step a) a starting material comprising at least one carbon nitride precursor material, at least one polymer and a diluent is provided.

A carbon nitride precursor material may be any known material or compound that can be converted into a carbon nitride upon heating. Typically such materials and compounds include nitrogen containing organic compounds comprising C-N single or double bonds and lacking C-C bonds. Any oxygen and sulfur atomes present in such compunds are typically eliminated upon heating as $H_2O$ and $H_2S$ respectively.

Preferred carbon nitride precursor materials include melamine, guanidine, cyanuric acid, dicyandiamide, urea, thiourea, 5-amino-tetrazole, 3-amino-1,2,4-triazole, 3-amino-1,2,4-triazole tetramer, 3-amino-1,2,4-triazole-5-thiol, cyanuric acid and any mixtures of the aforementioned materials, whereby melamine, guanidine, cyanuric acid, dicyandiamide, urea and any mixtures thereof are preferred and melamine and mixtures of melamine-cyanuric acid are particularly preferred.

A polymer may be any synthetic or natural or mixed natural any synthetic polymer, whereby polymers only comprising carbon and hydrogen and either additionally nitrogen and/or oxygen atoms or not are preferred.

Such polymers include polyethylene, polypropylene, polystyrene, polyesters, polyacrylates and polymethylacrylates like polymethylmethacrylate, polyvinylamine, polyvinylpyrrolidone, polyvinylalcohol, polyvinylacetals such as polyvinylbutyral, polyvinylesters such as polyvinylacetate and polyvinylpropionat, mixed polyvinylesters-polyvinylacetals polyethers such as polyalkyleneglycols like polyethyleneglycol, polypropyleneglycol and polybutyleneglycol or polyalkyleneglycolethers like polyethyleneglycoldimethylether; natural rubber (NR), epoxidized natural rubber (ENR), polyisoprene rubber, polyisobutylene rubber, poly(styrene-co-butadiene) rubber (SBR), polybutadiene rubber (BR), ethylene vinylacetate (EVA) rubber, ethylene acrylate rubber, poly(isoprene-co-butadiene) rubber (IBR), styrene-isoprene-butadiene rubber (SIBR), ethylene-propylene rubber (EPR), ethylene-propylene-diene M-class rubber (EPDM), nitrile-butadiene rubber (NBR), hydrogenated nitrile-butadiene rubber (HNBR), propylene oxide polymers, butyl rubbers (isobutylene-co-isoprene rubber); poly(isobutylene-co-p-methylstyrene), poly(isobutylene-co-isoprene-co-styrene), polyurethanes (PU), polyacrylic esters (ACM, PMMA), thermoplastic polyester urethane (AU), thermoplastic polyether urethane (EU), polyamides such as PA 6 and PA 6,6, poly(3,4-ethylenedioxyselenophene) (PEDOS) and poly(3,4-ethylenedioxythiophene) (PEDOT).

In one embodiment the polymers are selected from polystyrene, polyvinylalcohol, polyvinylacetals such as polyvinylbutyral, mixed polyvinylesters-polyvinylacetals and polyethers.

A diluent can be any compound capable of at least partially, preferably fully dissolving the polymer(s) and/or the carbon nitride precursor materials. Thereby the diluent typically helps to homogenize the starting material for the coating step b).

It is apparent to those skilled in the art that depending on the type and amount of both components, the polymer(s) and the carbon nitride precursor material(s) the most suitable diluents may vary. However the suitability of a diluents can be determined in very few orienting examples.

Typically, suitable diluents include unchlorinated or chlorinated hydrocarbons such as benzene, toluene, o-, m- and p-xylene, chlorobenzene, dichloromethane and chloroform; alcohols such as methanol, ethanol, n-propanol, isopropanol, glycol, n-butanol, hexanol; nitriles such as benzonitrile and acetonitrile; water, amides such as formamide, N,N-dimethylformamide and N-methylpyrrolidone; sulfones such as dimethylsulfone; sulfoxides such as dimethylsulfoxide and to the extend miscible any mixture of the aforementioned diluents.

In one embodiment dichloromethane, water, methanol, ethanol, acetonitrile or isopropanol are employed.

The amount of polymer(s) is for example selected that the weight ratio between all polymers and all carbon nitride precursor materials employed is from 1.0:10.0 to 10.0:1.0, preferably from 1.0 :5.0 to 5.0:1.0 and more preferably from 1.0 :4.0 to 1.5:1.0.

The amount of diluent is for example selected that the weight ratio between the diluent and the sum of all polymers and all carbon nitride precursor materials employed is from 1.0:1.0 to 20.0:1.0, preferably from 2.0 :1.0 to 10.0:1.0 and more preferably from 2.0 :1.0 to 6.0:1.0.

The starting materials employed in step a) may further comprise salts such as alkali metal earth alkali metal and transitions metal salts such as nitrates, halides and sulfates, the aforementioned e.g. in form of nanoparticles. They may further or alternatively comprise carbon nanoparticles and/or carbon dots such as those described in WO2019/229255 A which is incorporated herein by reference in its entirety.

In a preferred embodiment the starting material is a homogeneous solution of the polymers, the carbon nitride

materials and the diluents employed.

In step b), a substrate, preferably a conductive substrate is coated with the starting material whereby the diluent is removed.

A substrate might be any compound or material that is capable to withstand the temperatures applied in step c) without noticeable degradation or deformation.

Suitable substrates include glass with any suitable composition, ceramics, metals having a melting point above the temperature selected in step c) e.g. in form of metal foils or plates, graphite e.g. in form of graphite sheets or graphite paper.

Where conductive substrates are desired such substrates are typically selected from glass coated with tin oxide, in particular fluorine-doped tin oxide or indium-tin-oxide, metal foils and graphite.

Where transparent, conductive substrates are desired such substrates are typically selected from glass coated with tin oxide, in particular fluoride-doped tin oxide or indium-tin-oxide.

Step b) may be performed by any tecnique allowing to distribute a liquid or suspension on a substrate such as spraying, brushing, dripping, dipping, spin-coating, whereby spin-coating is preferred.

Evaporation of the diluent may be facilitated by applying reduced pressure or elevated temperature each compared to ambient conditions.

Upon performance of step b) a substrate coated with polymer(s) and the carbon nitride precursor materials is obtained.

The thickness of the coating is for example in the range of 10 to 5,000 nm, preferably in the range of 100 to 2,000 nm.

The thickness can be adjusted to a desired level for example by varying the ratio of diluent to the sum of polymers and the carbon nitride precursor materials. The less diluent is employed the thicker the resulting coating usually is. Thickness can also be determined by the rate of spinning where spin-coating is applied or the number of spraying, brushing, dripping or dipping cycles.

The employment of the polymer(s) as a kind of film-forming agent typically leads to homogeneous, smooth coatings on the substrates.

In step c) the coated substrate obtained in step b) is exposed to vapours of at least one carbon nitride precursor material and a temperature of 400°C to 700°C, preferably 450°C to 650°C and more preferably 500°C to 600°C under substantial exclusion of oxygen.

As used herein "substantial exclusion of oxygen" shall mean that the exposure of the coated substrate to the desired temperature and the vapour is performed under an inert gas or under a stream of inert gas or reduced pressure such that the partial pressure of oxygen in step c) is typically less than 50 hPa, preferably less than 10 hPa and more preferably less than 1 hPa. Suitable inert gases include nitrogen, argon and carbon dioxide, whereby nitrogen is preferred.

The carbon nitride precursor materials used in step c) may be any known material or compound that can be converted into a carbon nitride upon heating and may be the same as or different from those used in step a) including the specific compounds mentioned above. In a preferred embodiment only one carbon nitride precursor material is used, whereby melamine, guanidine, cyanuric acid, dicyandiamide are preferred and melamine is particularly preferred.

Step c) can be carried out in any vessel suitable for that purpose. This includes ceramic crucibles, glass or quartz ampoules, reactors made or lined with a temperature resistant material as long as these vessels are sufficiently stable and inert under the reaction conditions employed.

The total reaction pressure is not specifically limited, and the pressure in step b) may be from 1 hPa to 50 MPa, preferably from 900 hPa to 5 MPa, even more preferably under ambient pressure.

To ensure exposure of the coated substrate to vapours of at least one carbon nitride precursor material the latter is typically placed in a separate zone of the vessel employed i.e. a the bottom of the crucible or reactor while the coated substrate is placed in the space above or used a cap. To expose the coated substrate to the desired temperature suitable heating is employed.

Heating to the indicated temperatures in step c) can be accomplished in any device known to those skilled in the art and include heating in an oven, a muffle oven, a rotary kiln, a solar furnace and the like.

Upon heating the carbon nitride precursor materials employed are evaporated and the resulting vapours get in contact with the coated substrate.

Without wanting to be bound by theory it is assumed that the polymer of the substrate coating undergoes a gradual conversion upon heating and decomposes into a carbon skeleton which serves as a matrix for the carbon nitride precursor materials to condense and to form the second layer of the carbon nitride composition in such matrix. Upon further exposure such carbon skeleton disappears. As will be described in more detail below the second layer is typically formed as a porous network, in some embodiments a porous network of micro- or nanotubes. Other porous morphologies depending inter alia on temperature and polymer employed were also observed.

The porosity of this network allows the vapours e.g. of the additional carbon nitride precursor materials employed in step c) to condense on the substrate surface thereby forming the first, more condensed layer like in a common vapour

deposition (CVD) process.

Preferably, the exposure according to step c) is effected for a duration of at least 60 minutes, preferably at least 90 minutes, more preferably for at least 2 hours, for example for 2 to 24 hours or 2 to 12 hours. Longer exposure times are possible but virtually don't add any advantage, shorter reaction times may result in insufficient layer formation and inhomogeneous reaction.

Since conversion of the starting material to the carbon skeleton or matrix and the condensation and transformation of the carbon nitride precursor materials to the carbon nitrides are accompanied by loss of volatile components such as water, carbon monoxide and carbon dioxide, in one embodiment the heating to the desired temperature or temperature range is effected with a temperature rise of e.g. 1 to 15°C per minute, preferably 1.0 to 5.0 °C per minute e.g. starting from ambient temperature. In order to properly dry the starting materials and to improve condensation or degradation of the components the temperature rise may be interrupted once or more by times of stable temperature plateaus or not. Such temperature plateaus may be between 50°C and 300°C. The invention encompasses of course also other heating profiles fulfilling the same purpose.

As a result the carbon nitride composition with its two layers is formed in step c).

The process described above describes a facile and efficient way to produce the inventive carbon nitride compositions or where conductive substrates or transparent, conductive substrates are employed the inventive photoelectrodes.

Generally, the carbon nitride compositions according to the invention are particularly useful to produce photocatalysts and photoelectrodes, in particular photoanodes. Therefore, the invention further encompasses photoelectrodes, in particular photoanodes comprising

A) a conductive substrate
B) a carbon nitride composition according to the invention bound to the conductive substrate via the first layer.

Suitable conductive substrates are for example those listed above for the preparation of the carbon nitride compositions.

Without wanting to be bound by theory it is assumed that the unique electronic properties of the photoelectrodes result from the layered structure of different carbon nitrides. The second layer seems to increase the interfacial area with electrolyte and the first layer improves the affinity between the carbon nitride composition and the conductive substrate. The dopant and defect-related midgap states in the forbidden band of the first layer might contribute to the efficient charge migration and separation, resulting in long charge lifetimes.

In one embodiment the average photoluminescence decay time $t_{avg}$ at 530 nm is 1.5 ns or more, preferably 2.0 ns to 5.0 ns and more preferably from 2.5 to 3.5 ns as measured by time-resolved transient photoluminsescence of the carbon nitride compositions according to the invention.

In another embodiment the incident photon-to-current conversion efficiency (IPCE) of the photoelectrodes according to the invention are 10.0 to 25.0 % for wavelengths of 350 to 420 nm and 2.5 to 15.0 % for wavelenghts of 420 to 500 nm.

In a specific embodiment the incident photon-to-current conversion efficiency (IPCE) of the photoelectrodes according to the invention are 5.0 to 22.0 % for a wavelength of 365 nm and 1.0 to 20.0 % for a wavelength of 415 nm.

The invention further relates to a photoelectric cell comprising the inventive photoelectrodes.

In a simpe exemplified setup a photoelectrochemical cell (PEC) comprises at least

i) a container to confine or hold components ii) to iv) and optionally v)
ii) a photoelectrode according to the invention, in one embodiment serving as the photoanode
iii) a counter electrode, in one embodiment serving as the counter cathode
iv) an electrolyte
v) and optionally a reference electrode.

The container can be any container known to those skilled in the art to be suitable for the intended purposes i.e. to confine components ii) to v) such as a glass flask, vials, tubes and metal containers.

The photoelectrode according to the invention may be e.g. applied as a sheet or film, for example with a size of 0.1 $cm^2$ to 1 $m^{2,}$ preferably 1 $cm^2$ to 1000 $cm^2$ neglecting the surface roughness and porosity of the carbon nitride composition being part of it.

The photoelectrode according to the invention may also be a part of the container.A suitable counter electrode serving as a cathode may be a metal electrode such as a noble metal electrode like a solid platinum electrode, or a platinum mesh electrodeor other (transition) metal electrodes. Further electrodes include glassy carbon and carbon electrodes.

The selection of suitable electrolyte depends on the substrate to be converted.

Where water-soluble substrates or water are converted suitable electrolytes include aqueous solutions of salts, bases or acids such as alkali metal sulfates such as sodium sulfate, alkali metal chlorides such as sodium chloride or potassium chloride, alkali metal hydroxides auch as sodium hydroxide or potassium hydroxide and hydrochloric acid.

Where substrates like organic substrates are converted which are only sparingly soluble in water suitable electrolytes include alcoholic solutions of salts such as alkali metal bis(trifluoromethane) sulfonimides such as lithium bis(trifluoromethane) sulfonamide, perfluoro alkali metal or quaternary ammonium perchlorates such as lithium perchlorate and tetrabutylammonium perchlorate, alkali metal and quaternary ammonium hexafluorophosphates such as lithium and tetrabutylammonium hexafluorophosphate, alkali metal tetrafluoroborates such as lithium tetrafluoroborate, alkali metal alcoholates such as sodium methanolate.

Suitable alcohols include methanol and ethanol.

Further suitable electrolytes include acetonitrile, acetone, dimethylsulfoxide and hexafluoroisopropanol with salts, preferably above mentioned salts being dissolved therein.

Suitable substrates include any chemical compound which can be chemically converted in the PEC according to the invention upon irradiation with electromagnetic radiation having a sufficient wavelength to generate photoelectrons in the carbon nitride composition and thus the photoelectrode according to the invention and consequently a photocurrent. Where water or other solvents form part of the electrolyte such components may simultaneously serve as a substrate.

Typically the PEC according to the invention comprises a suitable electrically conductive material connecting the cathode and the anode which may be any material knwon for that purpose and includes standard cables and wires as well as a voltage source to apply a bias.

A typical bias ranges from 0.1 to 1.0 V , preferably in the range of 0.2 to 0.5 V.

The abovementioned carbon nitride compositions and photoelectrodes and photoelectrochemical cells are particularly useful in a process for the photocatalyzed reaction of organic compounds using carbon nitride compositions, photoelectrodes or photoelectrochemical cells according to the invention.

## Applications

According to one aspect of the invention there is therefore provided a process for the photoelectrochemical reaction of a substrate as described above wherein the photoelectrochemical reaction is carried out in the presence of at least one carbon nitride composition or a photoelectrode or a photoelectrochemical cell according to the invention.

Therefore, the invention also encompasses the use of the carbon nitride compositions or photoelectrodes or photoelectrochemical cell according to the invention as a photocatalyst.

Such photoelectrochemical reactions include reactions of substrates having a half peak potential as measured via electrochemical cyclovoltammetry against a saturated calomel electrode (SCE) at a scan rate of 50 mV/s f from -1.5 V to +0.7 V e.g. as given in H.G. Roth, N.A. Romero and D.A. Nicewicz, Synlett, 2016, 27, 714-729 and the supporting information thereto.

In particular such photoconversions include photooxidations, for example hydroxylation reactions and dehydrogenation reactions

The aforementioned hydroxylation reactions include in particular the following:

A process for the preparation of compounds of formula (I)

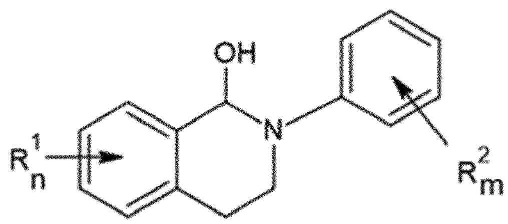

(I)

wherein

n and m each independently denote 0, 1, 2 or 3, preferably 0, 1 or 2

$R^1$ and $R^2$ each independently denote substituents selected from the group consisting of halogen, cyano, $C_6$-$C_{14}$-aryl, $C_1$-$C_{18}$-alkyl, $C_1$-$C_{18}$-haloalkyl, $C_1$-$C_{18}$-alkoxy, $C_1$-$C_{18}$-haloalkoxy, $C_2$-$C_{18}$-alkenyl, $C_1$-$C_{18}$-alkylthio, $C_7$-$C_{20}$-arylalkyl-$COR^6$, $-OCOR^7$, and $-(CO)OR^6$, preferably from the group consisting of $C_1$-$C_8$-alkyl, $C_1$-$C_8$-haloalkyl and $C_1$-$C_8$-alkoxy whereby

$R^6$ denotes substituents selected from the group consisting of hydrogen, $C_6$-$C_{14}$-aryl, $C_1$-$C_{18}$-alkyl and

$C_7$-$C_{20}$-arylalkyl or two substituents $R^6$ together denote $C_2$-$C_8$-alkanediyl which is either not, once or twice interrupted by -O-

$R^7$ denotes substituents selected from the group consisting of $C_6$-$C_{14}$-aryl, $C_1$-$C_{18}$-alkyl and $C_7$-$C_{20}$-arylalkyl

by irradiating the photoanode of a photoelectrochemical cell according to the invention with electromagnetic radiation of a wavelength and intensity sufficient to induce a photocurrent and wherein the electrolyte comprises a compound of formula (II)

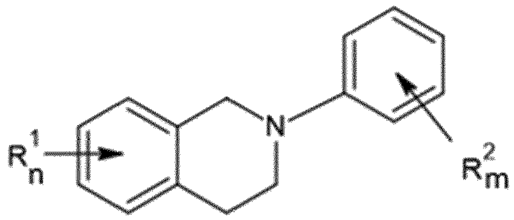

(II)

wherein n, m, $R^1$ and $R^2$ have the same meaning as mentioned above for compounds of formula (I).

The abovementioned dehydrogenation reactions include for example the following:

A process for the preparation of compounds of formula (III)

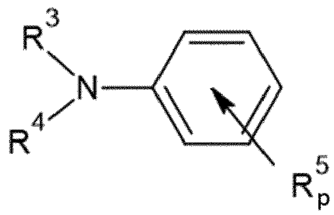

(III)

wherein

| | |
|---|---|
| $R^3$ and $R^4$ | each independently denote substituents selected from the group consisting of $C_6$-$C_{14}$-aryl, $C_1$-$C_{18}$-alkyl and $C_7$-$C_{20}$-arylalkyl or |
| $R^3$ and $R^4$ | together denote $C_2$-$C_8$-alkanediyl which is either not, once or twice interrupted by -O- |
| $R^5$ | independently denotes a substituent selected from the group consisting of halogen, cyano, $C_6$-$C_{14}$-aryl, $C_1$-$C_{18}$-alkyl, $C_1$-$C_{18}$-haloalkyl, $C_1$-$C_{18}$-alkoxy, $C_1$-$C_{18}$-haloalkoxy, $C_2$-$C_{18}$-alkenyl, $C_1$-$C_{18}$-alkylthio, $C_7$-$C_{20}$-arylalkyl, -$COR^6$, -$OCOR^7$, and -(CO)$OR^6$, preferably from the group consisting of $C_1$-$C_8$-alkyl, $C_1$-$C_8$-haloalkyl and $C_1$-$C_8$-alkoxy and wherein $R^6$ and $R^7$ have the same meaning as given above |
| p | denotes 0, 1, 2 or 3, preferably 0 or 1 |

by irradiating the photoanode of a photoelectrochemical cell according to the invention with electromagnetic radiation of a wavelength and intensity sufficient to induce a photocurrent and wherein the electrolyte comprises at least one compound of formula (IV)

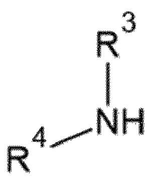

(IV)

and at least one compound of formula (V)

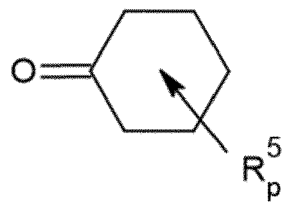

(V)

whereby in formulae (IV) $R^3$ and $R^4$ and in formula (V) $R^5$ and p have the same meaning as mentioned above for compounds of formula (III) and an acid.

As used hereinabove, and unless specifically stated otherwise, $C_1$-$C_{18}$-alkyl, $C_1$-$C_{18}$-haloalkyl, $C_1$-$C_{18}$-alkoxy, $C_1$-$C_{18}$-haloalkoxy $C_2$-$C_{18}$-alkenyl, $C_1$-$C_{18}$-alkylthio and $C_2$-$C_8$-alkanediyl comprise straight-chain, cyclic either in part or as a whole, branched or unbranched $C_1$-$C_{18}$-alkyl, $C_1$-$C_{18}$-haloalkyl, $C_1$-$C_{18}$-alkoxy, $C_1$-$C_{18}$-haloalkoxy, $C_2$-$C_{18}$-alkenyl, $C_1$-$C_{18}$-alkylthio and $C_2$-$C_8$-alkanediyl substituents. The same applies to the alkanediyl moiety of an $C_7$-$C_{20}$-arylalkyl substituent.

Specific examples of $C_1$-$C_{18}$-alkyl are methyl, ethyl, n-propyl, isopropyl, n-butyl, tert-butyl, n-pentyl, cyclohexyl, n-hexyl, n-heptyl, n-octyl, isooctyl, norbornyl, adamantyl, n-decyl, n-dodecyl alkyl, n-hexadecyl and n-octadecyl.

Specific examples of $C_1$-$C_{18}$-alkoxy-substituents are methoxy, ethoxy, isopropoxy, n-propoxy, n-butoxy, tert-butoxy and cyclohexyloxy.

Specific examples of $C_2$-$C_8$-alkenyl- substituents are allyl, 3-propenyl and buten-2-yl.

As used hereinabove, $C_1$-$C_{18}$-haloalkyl and $C_1$-$C_{18}$-haloalkoxy are $C_1$-$C_{18}$-alkyl and $C_1$-$C_{18}$-alkoxy susbtituents which are once, more than once or fully substituted by halogen atoms.

Specific examples of $C_1$-$C_{18}$-haloalkyl-substituents are trifluoromethyl, 2,2,2-trifluoroethyl, chloromethyl, fluoromethyl, bromomethyl, 2-bromoethyl, 2-chloroethyl, nonafluorobutyl and n-perfluorooctyl.

As used herein, and unless specifically stated otherwise, $C_6$-$C_{14}$-aryl denotes carbocyclic aromatic substituents, preferably phenyl, naphthyl, phenanthrenyl and anthracenyl, whereby said carbocyclic, aromatic substituents are unsubstituted or substituted by up to five identical or different substituents per cycle. For example and with preference, the substituents are selected from the group consisting of halogen, $C_1$-$C_{18}$-alkyl, $C_1$-$C_8$-haloalkyl, $C_1$-$C_{88}$-alkoxy, $C_1$-$C_{18}$-haloalkoxy, $C_6$-$C_{14}$-aryl, in particular phenyl and naphthyl, di($C_1$-$C_{18}$-alkyl)amino, ($C_1$-$C_{18}$-alkyl)amino, CO($C_1$-$C_{18}$-alkyl), OCO($C_1$-$C_{18}$-alkyl).

In a preferred embodiment, the carbocyclic, aromatic substituents are unsubstituted or substituted by one or two identical or different substituents per cycle selected from the group consisting of fluorine, chlorine, cyano, $C_1$-$C_{18}$-alkyl, $C_1$-$C_{18}$-haloalkyl, $C_1$-$C_{18}$-alkoxy, $C_1$-$C_{18}$-haloalkoxy, $C_6$-$C_{14}$-aryl, in particular phenyl.

The definitions given above including their areas of preference also apply analogously to the aryl moiety of a $C_7$-$C_{20}$-arylalkyl substituent.

For the carbon nitride compositions and photoelectrodes used herein generation of a photoelectrons (excitation) and consequently a photocurrent is typically induced by irradiation with electromagnetic radiation comprising a wavelength of 200 to 800 nm, preferably from 350 to 550 nm, more preferably in the range of 350 to 500 nm, even more preferably in the range of 350 to 460 nm.

Suitable sources of electromagnetic radiation include eximer lasers such as Argon fluoride-lasers; UV lamps like low-pressure, medium-pressure, high-pressure and superhigh-pressure mercury lamps which can be undoped or doped e.g. with gallium iodide, thallium iodide or other metal halides; green, blue, violet or violet-blue LEDs; unconcentrated or concentrated, direct or indirect sunlight; microwave-excited metal vapour lamps; excimer lamps, fluorescent lamps; and noble gas incandescent lamps.

Preferred sources are blue, violet or violet-blue LEDs, preferably those with a maximum emission at 461 nm; unconcentrated or concentrated, direct or indirect sunlight.

In an embodiment, multichromatic sources of electromagnetic radiation such as LED lamps such as a 50 W LED Chip, having a color temperature of 6000 to 6500K, 30-34V, 1500 mA, adjusted to a light intensity of 150 $mW/cm^2$ are used.

As used herein a multichromatic sources of electromagnetic radiation denotes a source emitting electromagnetic radiation having more than one relative emission maxima (also known as emission bands) preferably more than one relative emission maxima within the wavelength ranges disclosed above.

The intensity of the electromagnetic radiation sufficient to induce a photocurrent is typically in the range of 50 $mW/cm^2$ to 2 $W/cm^2$, preferably from 50 $mW/cm^2$ to 500 $mW/cm^2$, and more preferably from 100 $mW/cm^2$ to 300 $mW/cm^2$.

It is apparent to those skilled in the art that the photocurrent and thus the reaction yield and time depends on

the intensity and/or the time of irradiance.

The reaction time or time of irradiance may for example be from 1 minute to 24 hours, preferably from one minute to 6 hours, more preferably and typically from 30 minutes to 3 hours.

In one embodiment irradiation is performed permanently or in intervals, e.g. in intervals of 10 to 300 s, with dark times of 5 to 300 s between the irradiation intervals. Other irradiation schemes are also possible.

The photoelectrochemical conversions may be performed batchwise or continuously i.e. in a flow-through electrochemical cell.

Where continuous conversions are performed the reaction time denotes the average residence time calculated based on input, output and vessel content.

The reaction pressure may vary from 100 hPa to 10 MPa, preferably from 900 hPa to 1 MPa and more preferably from 900 hPa to 0.2 MPa, e.g. under ambient pressure.

A major advantage of the present invention is the possibility to perform a large variety of photoelectrochemical reactions at a broad range of conditions and with high conversion using the inventive carbon nitride compositions and photoelectrodes. Further the carbon nitride compositions and photoelectrodes are metal free, easy-to-make and exhibit unprecedented photocurrents and quantum yields under irradiation.

In the following, the present invention is illustrated by examples which however not intended to limit the scope of invention.

## Experimental section:

## I Chemicals and Methods

### 1 Scanning electron microscopy (SEM) energy-dispersive X-Ray (EDX) analysis

SEM-EDX investigations were recorded with a JEOL JSM-7500F instrument coupled a Link ISIS-300 system equipped with a Si (Li) detector operated with an energy resolution of 133 eV.

### 2 X-ray photoelectron spectroscopy (XPS) and surface etching

A Thermo Scientific K-alpha+ spectrometer was used with a MAGCIS Dual Mode Ion Source for depth profiling with Argon ion clusters. The monochromatic AlK$\alpha$ line was used as X-ray excitation (1486.6 eV) with pass energy of 50 eV to obtain high resolution spectra. The samples were analyzed using a microfocused, monochromated Al K$\alpha$ X-ray source (400 $\mu$m spot size). XPS spectra were fit with one or more Voigt profiles (binding energy uncertainty: $\pm$0.2 eV) and Scofield sensitivity factors were applied for quantification (Scofield, J. H. Hartree-Slater Subshell Photoionization Cross-Sections at 1254 and 1487ev. J Electron Spectrosc 1976, 8, 129-137). Depth profiling was performed with Argon ions with 6 keV (1000 Argon atom clusters).

### 3 UV/VIS Spectra and Band Gap determination

Absorbtion spectra of the inventive carbon nitride compositions were measured at room temperature using a PG Instruments TG70+ UV/Vis Spectrometer. Band gap was determined using a common Tauc plot: The absorption spectrum, dependence of absorbance (A) versus wavelength of electromagnetic radiation ($\lambda$, m), was converted into and plotted as the dependence of $(Ahc\lambda^{-1})^2$ versus $hc\lambda^{-1}$, wherein h denotes the Planck constant, $6.63 \cdot 10^{-34}$ $m^2$ kg $s^{-1}$ and c the speed of light in vacuo, $3 \cdot 10^8$ m $s^{-1}$. The band gap was then determined by extrapolating the linear region (tangent) of the curve to the abscissa. See also Zanatta, A. R., "Revisiting the optical bandgap of semiconductors and the proposal of a unified methodology to its determination". Scientific Reports. 9: 11225 (2019).

### 4 Emission decay lifetime

The time-resolved transient PL decay spectra were measured at room temperature using a TCSPC FluoTime 250 (PicoQuant) spectrometer equipped with a PDL 800-D picosecond pulsed diode laser driver. Equations (1) and (2) were applied to carry out the di-exponential kinetic analysis and to calculate the average lifetime $T_{avg}$, respectively.

$$y = \sum a_i e^{-(\frac{t}{\tau_i})} \qquad (1)$$

$$\bar{\tau} = \frac{\sum a_i \tau_i^2}{\sum a_i \tau_i} \qquad (2),$$

where y is the intensity usually assumed to decay as the sum of individual exponential decays, $a_i$ is the pre-exponential factor and $T_i$ is the decay time.

**5 Steady-state emission spectroscopy**

The emission spectra were recorded on a Jasco FP-8300. The excitation wavelength was 350 nm.

**6 Cyclovoltammetry & Linear Sweep Voltammetry**

Cyclovoltammograms were recorded using a three-electrode potentiostat (BioLogic MPG2) at a scan rate of 50 mV/s at a temperature of 25 °C, with Ag/$AgNO_3$ as the reference electrode (RE), and Platinum mesh as the counter electrode (CE) and working electrode (WE).

Linear sweep voltammetry were recorded using a three-electrode potentiostat (BioLogic MPG2) at a scan rate of 50 mV/s at a temperature of 25 °C, with Ag/$AgNO_3$ as the reference electrode (RE), and Platinum mesh as the counter electrode (CE) and inventive carbon nitride electrode as working electrode (WE).

**7 Photoelectrochemical Cell**

Photoreactions were caried out in a photoelectrochemical cell comprising a cylindrical 5 mL vessel (diameter ~2 cm) with a water cooling jacket (glass, 25 °C) and a 50 W LED Chip (6000 to 6500K color temperature, 30-34V, 1500 mA) at 150 mW/cm$^2$. Electrolyte was 0.1 M $LiClO_4$ in methanol (or acetonitrile).

**8 Photocurrents / IPCE:**

A series of fiber-coupled LEDs (SMA, ThorLabs) with wavelengths of 365 nm, 415 nm, 455 nm, 530 nm, 625 nm, and 850 nm were connected to the LED Driver (DC2200, ThorLabs) and used as light sources for the IPCE measurements, with a power density screening from 0.9 to 3.6 mW/cm$^2$. For each wavelength, we studied the dependence of current density versus intensity of the incident light (5 data points). The current density depends linearly on the intensity of the incident light. The slope of linear fitting corresponds to the ratio between $J_{Ph}$ and $J_{Light}$. Measurements were performed in 0.1 M $Na_2SO_4$ in water at 1.23 V vs RHE.

**9 Photoelectrochemical (PEC) measurements**

PEC measurements were performed with a three-electrode potentiostat (BioLogic MPG2) with the inventive carbon nitride compoisitons (the photoanode) as the working electrode, Ag/$AgNO_3$ as the reference electrode (RE), and Platinum mesh as the counter electrode (CE). Measurements have been conducted in solution of $LiClO_4$ (0.1 M) in methanol. Photocurrent measurements have been conducted at applied bias of +0.3 V vs RE. Light was provided by white LED module (150 mW cm$^{-2}$).

Alternatively in the PEC measurements, the inventive carbon nitride compoisitons (the photoanode) were used as the working electrode, Ag/AgCl in KCl (3M) as the RE, and Pt mesh as the counter electrode. Photocurrent measurements have been conducted at applied bias of +0.62 V vs RE. The photocurrent with reference to reversible hydrogen electrode (RHE) is calculated by using the following formula:

$$E_{(RHE)} = E_{Ag/AgCl} + 0.059\, pH + E^0_{Ag/AgCl}$$

wherein $E_{Ag/AgCl}$ is the applied working potential and $E^0_{Ag/AgCl}$ = 0.1976 V at 25°C.

**10 Chemicals**

All chemical reagents were used without further purification. Melamine (99%) and cyanuric acid (99%) are purchased from Alfa Aesar. Lithium perchlorate(99+%), 6,7-Dimethoxy-1,2,3,4-tetrahydroisoquinoline hydrochloride

(98%), 4-Iodoanisole (98%) from Acros organics. 1,2,3,4-Tetrahydroisoquinoline (95%), 3-Iodoanisole (99%), Iodobenzene (98%), 3-Iodoanisole (99%) from Sigma Aldrich. Anhydrous tripotassium phosphate (≥98%) and Copper(I) iodide (98%) are from Merck. 1-Iodo-4-(trifluoromethyl)benzene (97 %) is from Thermo Scientific. All solvents were purchased from Sigma-Aldrich: Methanol (≥99.8%), Acetonitrile (≥99%).

## II Examples

### Example 1 - Preparation of carbon nitride compositions and photoelectrodes

1.29 g cyanuric acid was mixed with 1.26 g melamine in 50 mL water. Then, the mixture was shaken overnight and collected by centrifugation. After drying, the obtained supramolecular precursors are named Melamine-cyanuric acid supermolecules (MCA).

Amounts of MCA and polymer as indicated in table 1 were dissolved in 1 mL dichloromethane and stirred overnight. This homogenous suspension was spin-coated on either a clean fluorine-doped tin oxide (FTO) coated glass as a conducting substrate (6 cm x 6 cm, 7 Ω/sq, received from Merck) or graphite paper or an aluminum foil (thickness: 0.1 mm) at 60 rps.

A 29.5 mL rectangular alumina crucible with 5 g melamine was covered by the obtained slides with the material side on the bottom. The crucible was placed in a furnace, heated to the target temperature at a rate of 1.5 C/min and kept at that temperature for 3 h under nitrogen flow (3 L/min). The as-prepared slides were cut into small pieces (1 x 1.5 cm) and were directly used as photoelectrodes due to their conductive substrate.

Depending on the amount and type of polymer applied different carbon nitride compositions and photoelectrodes were obtained. The parameters are indicated in table 1:

Table 1:

| Example | MCA [mg] | Polymer type / Amount [mg] | Target Temperature [°C] | Substrate | Photocurrent [μA] |
|---|---|---|---|---|---|
| 1a | 100 | Polystyrene / 33 | 560 | FTO glass | 322 |
| 1b | 100 | Polystyrene / 50 | 560 | FTO glass | 432 |
| 1c | 100 | Polystyrene / 100 | 560 | FTO glass | 578 |
| 1d | 100 | Polystyrene / 50 | 570 | FTO glass | 220 |
| 1e | 100 | Polystyrene / 100 | 570 | FTO glass | 380 |
| 1f | 100 | Polystyrene butylacrylic copolymer / 50 | 570 | FTO glass | 155 |

### Characterization:

The composition and photoelectrode obtained according to example 1c was analyzed and characterized in detail.

The SEM image (see Fig. 1) clearly shows a double-layer structure of the inventice carbon nitride composition. The porous second layer contains more tubular carbon nitride, while the first layer is more condensed. It is assumed that in the sealed crucible, the high-pressure vapor can easily go through the carbon skeleton and condense on the surface of the (conductive) substrate. This first layer highly improves the charge transport between the second layer and the substrate. The total thickness of the carbon nitride composition was around 1.8 μm, as shown by cross-section SEM (see Fig. 2). After scratching the porous second layer, the first layer is observed as a transparent yellowish film with a thickness of around 100 nm (see Fig. 3). The thickness of the composition thus is mainly determined by the thickness of the second layer.

The bandgaps were extrapolated to be 1.9 eV for the second layer and 2.5 eV for the first layer via a Tauc plot (see Fig. 14). The narrow bandgap of the top layer can harvest a large portion of the solar spectrum. The valence band energy of the two layers differs significantly, resulting in the migration of photogenerated holes into the second layer. These holes can further contribute to the anode oxidation reaction.

The IR spectra of Fig. 4) show (i) the coated substrate obtained in step b) of example 1c before performing step c), denominated PS-MCASC, (ii) a carbon nitride formed according to comparison example 2 i.e. without using a coated substrate, denominated CN and iii) the carbon nitride composition according to example 1c, denominated CN-HSC. As can be seen the latter shows a significant decrease of the amine and imine peak even compared to the carbon nitride obtained according to example 2 which indicates a very high degree of condensation.

The same can be taken from the time-resolved carbon (see Fig. 5) and nitrogen (Fig. 6) spectra as well as the carbon / nitrogen atomic ratio (see Fig. 7) each measured at the surface i.e. the second layer of the carbon nitride composition according to example 1c upon 6 keV Ar-cluster (1000 atoms) sputtering for a duration of about 10 minutes.

The carbon / nitrogen atomic ratio remains pretty constant after a short time and with 0.73 to 0.76 is very close to the calculated ideal ratio of $C_3N_4$ (0.75).

For the inventive carbon nitride composition (here denoted kCN) a redshift up to 800 nm compared to conventional carbon nitrides (here a carbon nitride according to example 2 and denoted CN) is observed in the UV-VIS spectrum (see Fig. 8), indicating that dopant and defect-related midgap states (MS) are generated in the forbidden gap of the conventional carbon nitride.

The calculated incident photon-to-current conversion efficiency (IPCE) of the inventive photoelectrodes according to example 1c (here denoted kCN) at different illumination wavelengths (see Fig. 9) shows a direct correlation with light absorption. A high IPCE value of around 20 % is achieved at 365 nm, and a photoresponse can be detected up to 630 nm which is not the case for conventional carbon nitrides e.g. those obtained according to example 2 (in Fig. 9 denoted as CN).

Additionally, significant photoluminescence (PL) quenching occurs on the inventive photoelectrodes (here denoted as kCN) in the steady-state PL emission spectrum (see Fig. 10), implying the strongly inhibited recombination of photogenerated electron-hole pairs. The redshift of the main PL peak indicates charge migration through the interface of the double-layer structure. The steady-state PL emission spectrum for conventional carbon nitride is denoted with CN in Fig. 10.

The time-resolved transient PL decay spectra (see Fig. 11) further prove that the inventive carbon nitride composition / photoelectrode according to example 1c (denoted as kCN in Fig. 11) has a longer average lifetime ($T_{avg}$) of charge carriers with respect to the conventional CN electrodes (according to example 2 and denoted CN).

Linear sweep voltammetry of the photoelectrodes (see Fig. 12) shows an about 100 times higher current density and reduced oxidation potential under white light irradiation for the inventive photoelectrode according to example 1c (here denoted as kCN) compared to a conventional carbon nitride photoelectrode (according to example 2, here denoted as CN).

**Example 2: Preparation of carbon nitride for comparison**

A clean fluorine-doped tin oxide (FTO) coated glass (6 cm x 6 cm, 7 Ω/sq, Merck) covered a 29.5 mL rectangular alumina crucible with 5 g melamine (99 %, Alfa Aesar). The crucible was placed in a furnace (CMF-1200, Carbolite Gero, UK), set to 550 °C, the temperature increased at a rate of 1.5 °C/min to 550°C and finally kept at 550 °C for 3 h under nitrogen. The as-prepared slides were cut into small pieces (1 x 1.5 cm) and used as electrodes. See also Nature Mater 2016, 15, 1084-1089).

**Example 3: α-Hydroxylation of N-aryltetrahydroisochinolines**

The photoelectrode according to sample 1c was used as the anode in entries 3.1 to 3.6 and 3.8 to 3.13 in a PEC (three-electrode potentiostat as described in section I. 9 above applying the indicated bias versus $Ag/AgNO_3$ electrode as a reference and under irradiation with white light emitted from a CHANZON 50 W LED Chip, having a color temperature of 6000 to 6500K, 30-34V, 1500 mA, adjusted to a light intensity of 150 $mW/cm^2$ for the given reation time, with water cooling at 25 °C.

To prepare the reaction solution for the PEC, 50 μmol of a substrate of formula (I) and 0.5 mmol lithium perchlorate ($LiClO_4$) were dissolved in 5 ml of the solvent.

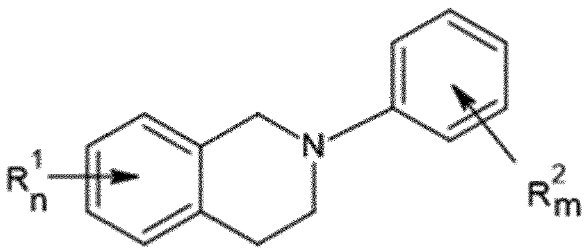

(I)

For entry 3.7 and for comparison platinum mesh was used as the anode.

The yields of compounds of formula (II) and the conditions of the different entries are shown in table 2.

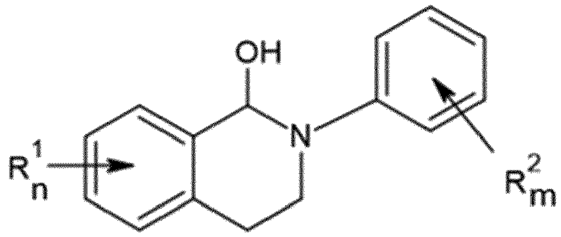

(II)

Table 2.

| Entry | Substrate | Bias | Reaction time | Light | Solvent | Yield (*) |
|---|---|---|---|---|---|---|
| 3.1 | No. 1 | 0.3 V | 5 h | White light | Acetonitrile | 86% |
| 3.2 | No. 1 | 0.3 V | 5 h | White light | Acetone | 86% |
| 3.3 | No. 1 | 0.3 V | 5 h | White light | DMSO | 100% |
| 3.4 | No. 1 | 0.3 V | 5 h | White light | Methanol | 100% |
| 3.5 | No. 1 | 0.3 V | 2 h | White light | Methanol | 100% |
| 3.6 (comp.) | No. 1 | No Bias | 2 h | White light | Methanol | 0% |
| 3.7 (comp.) | No. 1 | 0.61 V | 2 h | No light | Methanol | 19% |
| 3.8 | No. 2 | 0.3 V | 2 h | White light | Methanol | 100% |
| 3.9 | No. 3 | 0.3 V | 2 h | White light | Methanol | 100% |
| 3.10 | No. 4 | 0.3 V | 2 h | White light | Methanol | 100% |
| 3.11 | No. 5 | 0.3 V | 2 h | White light | Methanol | 93% |
| 3.12 | No. 6 | 0.3 V | 2 h | White light | Methanol | 86% |
| 3.13 | No. 7 | 0.3 V | 2 h | White light | Methanol | 75% |

* Yields were determined by NMR using $CH_2Br_2$ as the internal standard.

Substrates:

No. 1:

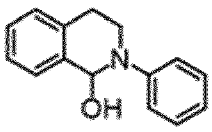

No. 2

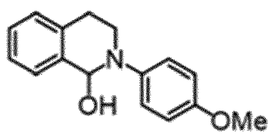

No. 3

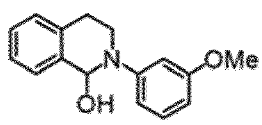

No. 4:

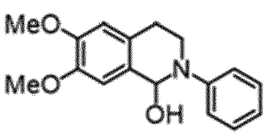

No. 5:

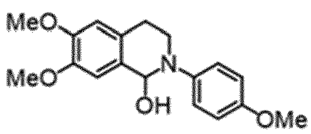

No. 6:

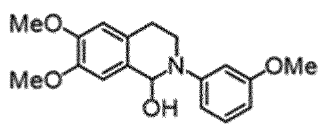

No. 7:

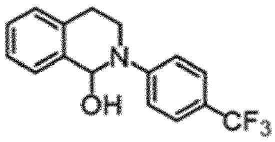

## Claims

**1.** A carbon nitride composition comprising

1) a first layer comprising a carbon nitride with a band gap of 2.40 to 3.20 eV, preferably 2.40 to 2.90 eV and more preferably 2.40 to 2.80 eV and
2) a second layer comprising a carbon nitride with a band gap of of 1.50 to 2.10 eV, preferably 1.60 to 2.00 eV and more preferably 1.65 to 1.95 eV.

**2.** The carbon nitride composition according to claim 1 wherein the first layer has a thickness of 2 to 800 nm, preferably 10 to 500 nm and more preferably 50 to 300 nm.

**3.** The carbon nitride composition according to claim 1 or 2 wherein the second layer has a thickness of 100 nm to 10.0 μm, preferably 500 nm to 10 μm and more preferably 1.0 μm to 5.0 μm.

**4.** A photoelectrode comprising

A) a conductive substrate
B) a carbon nitride composition according to any one of claims 1 to 3.

**5.** A process for the preparation of a carbon nitride composition according to claims 1 to 3 or a photoelectrode according to claim 4, comprising at least the steps of

a) providing a starting material comprising

i) at least one carbon nitride precursor material and
ii) at least one polymer and
iii) a diluent

b) coating a substrate, where a photopelectrode according to claim 4 shall be prepared coating a conductive substrate with the starting material and removing the diluent to obtain a coated substrate
c) exposing the coated substrate obtained in step b) to vapours of at least one carbon nitride precursor material and a temperature of 400°C to 700°C, preferably 450°C to 650°C and more preferably 500°C to 600°C under substantial exclusion of oxygen.

**6.** The process according to claim 5, wherein in step a) the carbon nitride precursor material is selected from melamine, guanidine, cyanuric acid, dicyandiamide, urea, thiourea, 5-amino-tetrazole, 3-amino-1,2,4-triazole, 3-amino-1,2,4-triazole tetramer, 3-amino-1,2,4-triazole-5-thiol, cyanuric acid and any mixtures of the aforementioned materials, whereby melamine, guanidine, cyanuric acid, dicyandiamide, urea and any mixtures thereof, whereby melamine and mixtures of melamine-cyanuric acid are particularly preferred.

**7.** The process according to claim 5 or 6, wherein in step a) the polymer is selected from any synthetic or natural or mixed natural any synthetic polymer, whereby polymers only comprising carbon and hydrogen and either additionally nitrogen and/or oxygen atoms or not are preferred.

**8.** The process according to any one of claims 5 to 7, wherein in step a) the polymer is selected from polyethylene, polypropylene, polystyrene, polyesters, polyacrylates and polymethylacrylates like polymethylmethacrylate, polyvinylamine, polyvinylpyrrolidone, polyvinylalcohol, polyvinylacetals such as polyvinylbutyral, polyvinylesters such as

polyvinylacetate and polyvinylpropionat, mixed polyvinylesters-polyvinylacetals polyethers such as polyalkyleneglycols like polyethyleneglycol, polypropyleneglycol and polybutyleneglycol or polyalkyleneglycolethers like polyethyleneglycoldimethylether; natural rubber (NR), epoxidized natural rubber (ENR), polyisoprene rubber, polyisobutylene rubber, poly(styrene-co-butadiene) rubber (SBR), polybutadiene rubber (BR), ethylene vinylacetate (EVA) rubber, ethylene acrylate rubber, poly(isoprene-co-butadiene) rubber (IBR), styrene-isoprene-butadiene rubber (SIBR), ethylene-propylene rubber (EPR), ethylene-propylene-diene M-class rubber (EPDM), nitrile-butadiene rubber (NBR), hydrogenated nitrile-butadiene rubber (HNBR), propylene oxide polymers, butyl rubbers (isobutylene-co-isoprene rubber); poly(isobutylene-co-p-methylstyrene), poly(isobutylene-co-isoprene-co-styrene), polyurethanes (PU), polyacrylic esters (ACM, PMMA), thermoplastic polyester urethane (AU), thermoplastic polyether urethane (EU), polyamides such as PA 6 and PA 6,6, poly(3,4-ethylenedioxyselenophene) (PEDOS) and poly(3,4-ethylenedioxythiophene) (PEDOT).

**9.** The process according to any one of claims 5 to 8, wherein the amount of polymer(s) is selected that the weight ratio between all polymers and all carbon nitride precursor materials employed is from 1.0:10.0 to 10.0:1.0, preferably from 1.0 :5.0 to 5.0:1.0 and more preferably from 1.0 :4.0 to 1.5:1.0.

**10.** The process according to any one of claims 5 to 9, wherein the substrate is selected from the group consisting of glass coated with tin oxide, in particular fluorine-doped tin oxide or indium-tin-oxide, metal foils and graphite.

**11.** The process according to any one of claims 5 to 10, wherein the coating in step b) is effected by spin-coating.

**12.** A carbon nitride composition or photoelectrode obtainable according to a process comprising at least steps a), b) and c) of claim 4

**13.** A photoelectrode according to claims 4 or 12 having an incident photon-to-current conversion efficiency (IPCE) of 5.0 to 22.0 % for a wavelength of 365 nm and 1.0 to 20.0 % for a wavelength of 415 nm.

**14.** A photoelectrochemical cell (PEC) comprising at least

i) a container to confine or hold components ii) to iv) and optionally v)
ii) a photoelectrode according to any one of claims 4, 12 or 13, in one embodiment serving as the photoanode
iii) a counter electrode, in one embodiment serving as the counter cathode
iv) an electrolyte
v) and optionally a reference electrode.

**15.** A process for the photoelectrochemical reaction of a substrate wherein the photoelectrochemical reaction is carried out in the presence of at least one carbon nitride composition according to claims 1 to 3 or a photoelectrode according to any one of claims 4, 12, 13 or 14 or a photoelectrochemical cell according to claim 15, preferably of a substrate having a half peak potential as measured via electrochemical cyclovoltammetry against a saturated calomel electrode (SCE) at a scan rate of 50 mV/s f from -1.5 V to +0.7 V.

Fig 1:

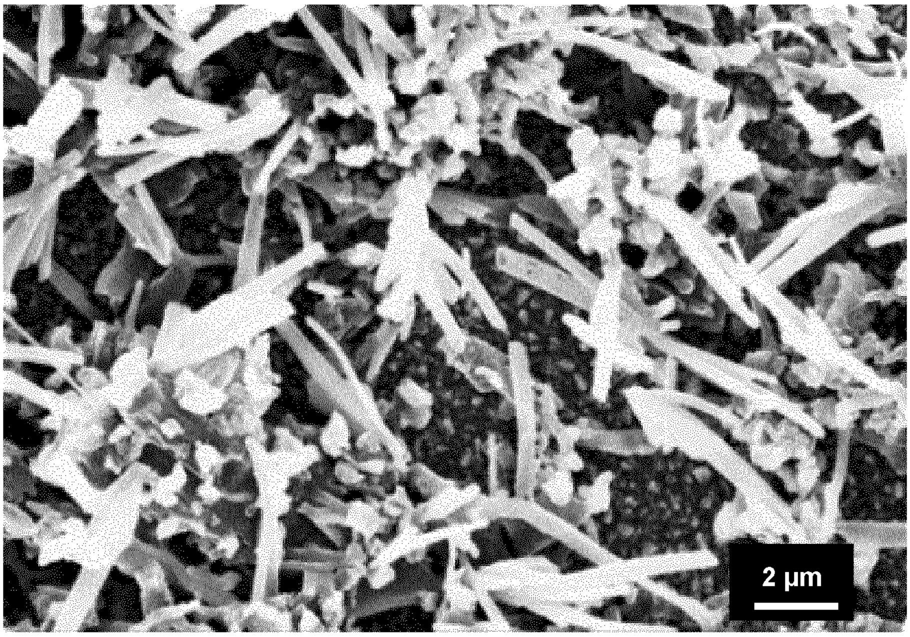


Fig 2:

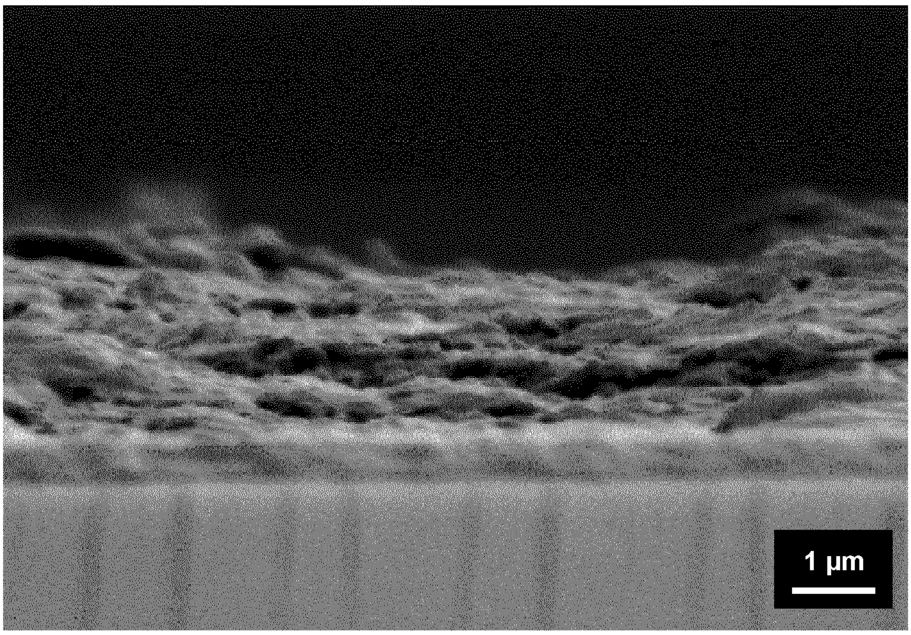

Fig. 3

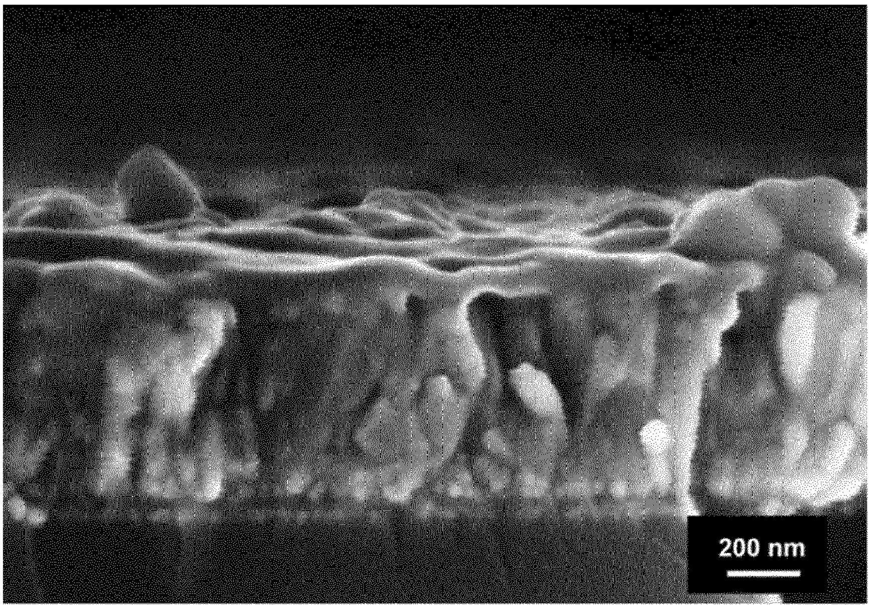
200 nm

Fig. 4

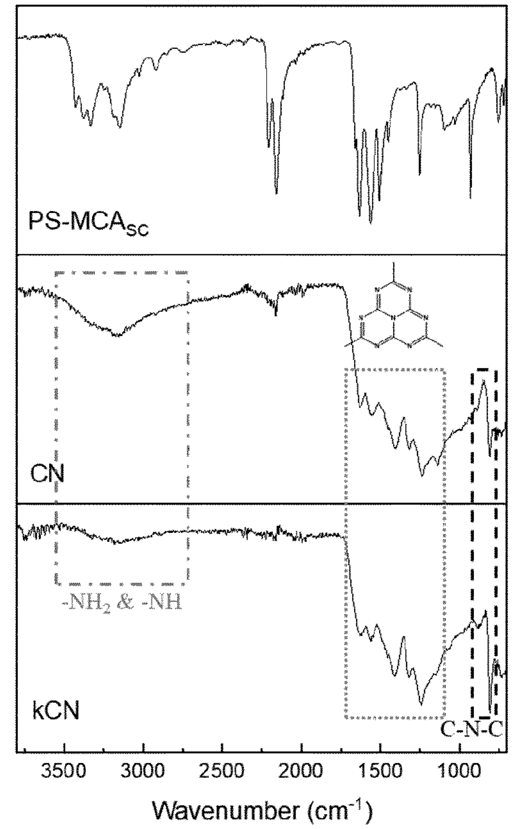
PS-MCA$_{SC}$
CN
kCN
-NH$_2$ & -NH
C-N-C
3500
3000
2500
2000
1500
1000
Wavenumber (cm$^{-1}$)

Fig. 5

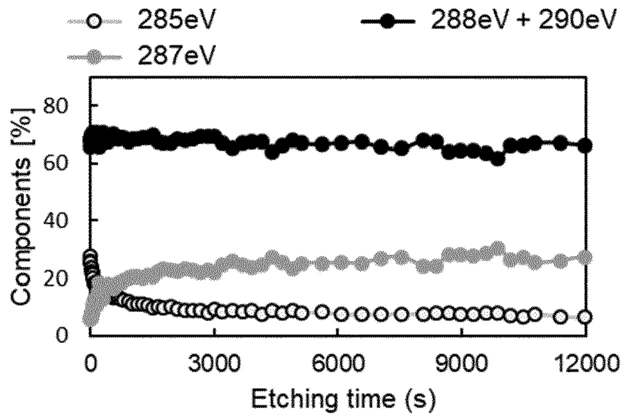
285eV
288eV + 290eV
287eV
Components [%]
0
20
40
60
80
0
3000
6000
9000
12000
Etching time (s)

Fig. 6

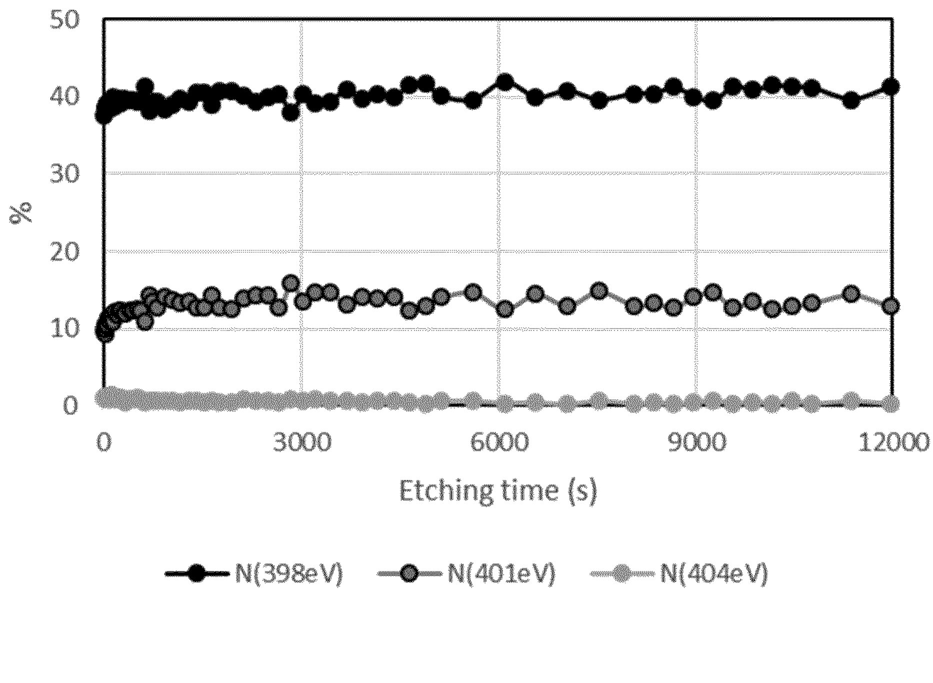
50
40
30
20
10
0
%
0
3000
6000
9000
12000
Etching time (s)
N(398eV)
N(401eV)
N(404eV)

Fig. 7

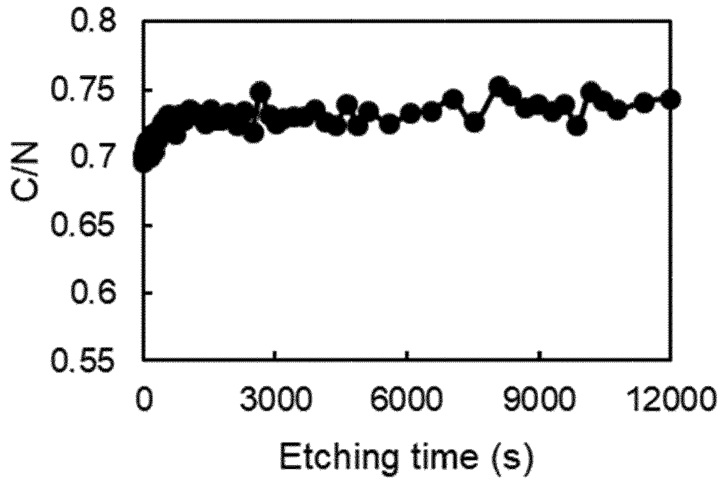
0.8
0.75
0.7
0.65
0.6
0.55
C/N
0
3000
6000
9000
12000
Etching time (s)

Fig. 8

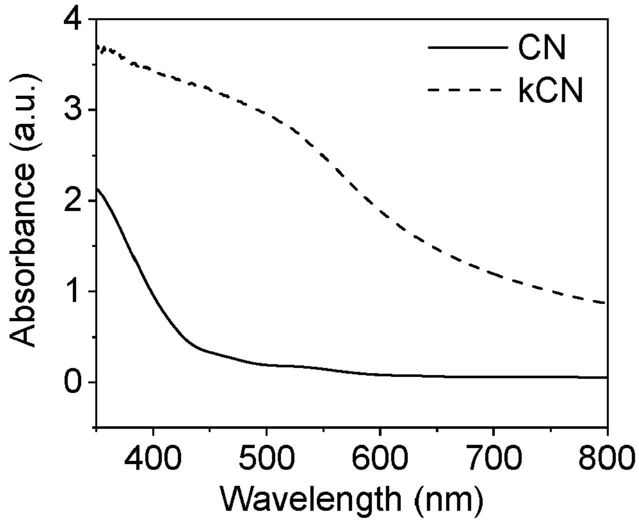
4
3
2
1
0
Absorbance (a.u.)
CN
kCN
400
500
600
700
800
Wavelength (nm)

Fig 9:

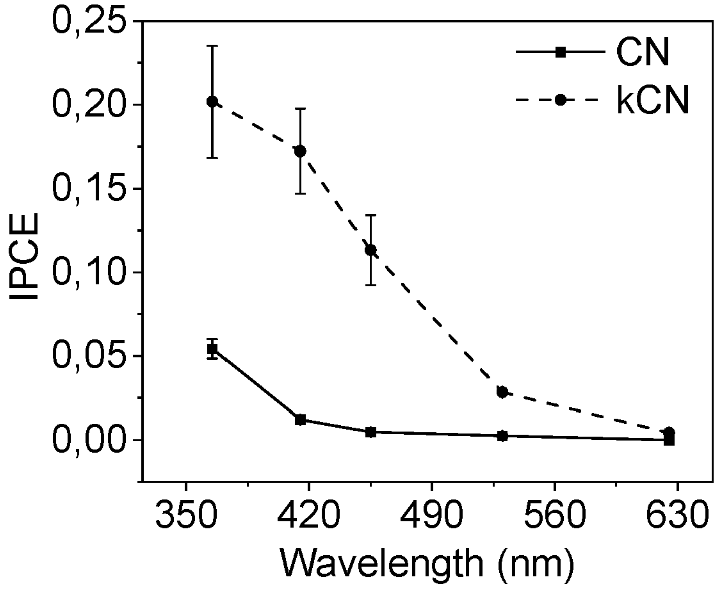
0,25
0,20
0,15
0,10
0,05
0,00
IPCE
350
420
490
560
630
Wavelength (nm)
CN
kCN

Fig 10:

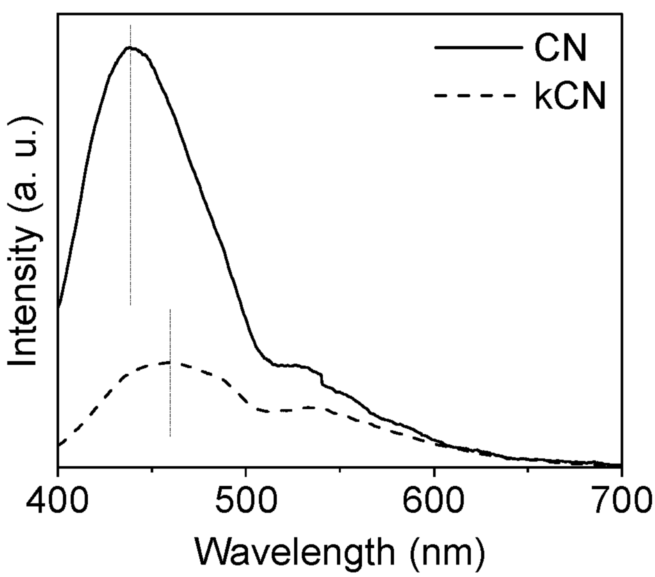
Intensity (a. u.)
400
500
600
700
Wavelength (nm)
CN
kCN

Fig 11:

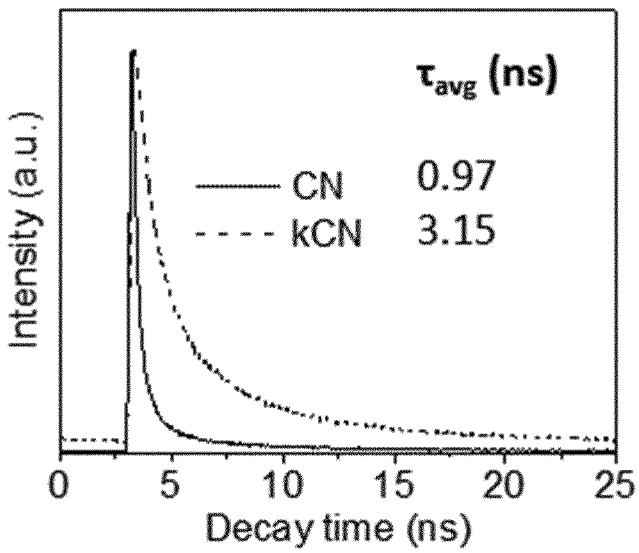
τavg (ns)
CN 0.97
kCN 3.15
Intensity (a.u.)
0
5
10
15
20
25
Decay time (ns)

Fig 12:

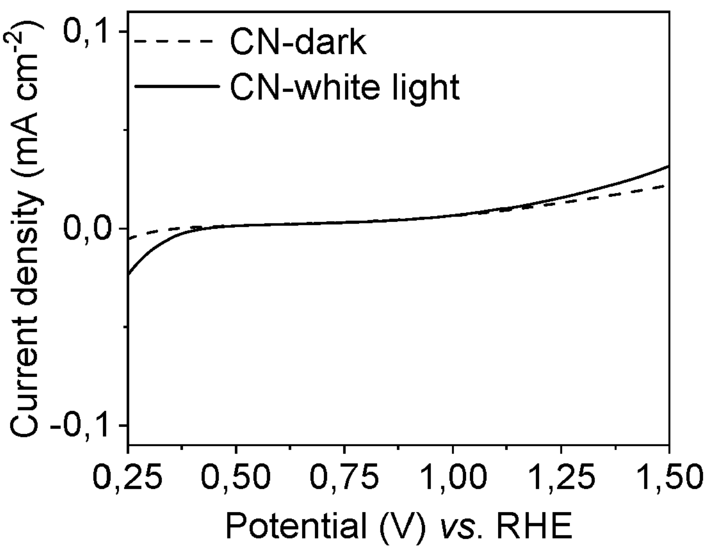
CN-dark
CN-white light
0,1
0,0
-0,1
Current density (mA cm-2)
0,25
0,50
0,75
1,00
1,25
1,50
Potential (V) vs. RHE

Fig 13:

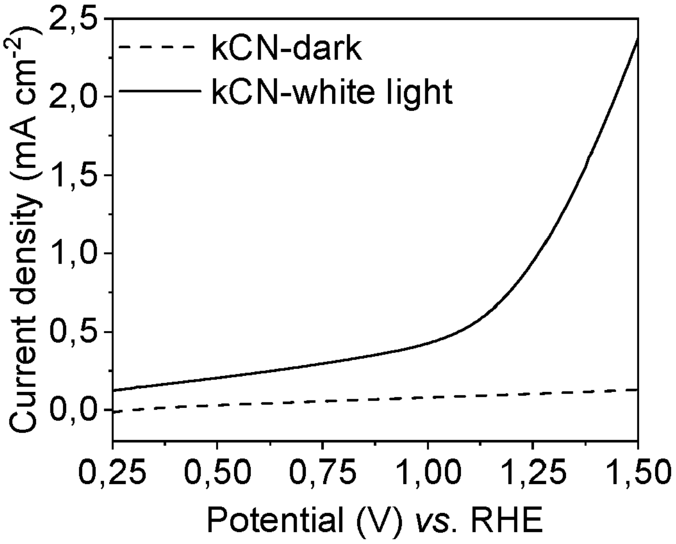
2,5
2,0
1,5
1,0
0,5
0,0
Current density (mA cm$^{-2}$)
kCN-dark
kCN-white light
0,25
0,50
0,75
1,00
1,25
1,50
Potential (V) *vs.* RHE

Fig 14:

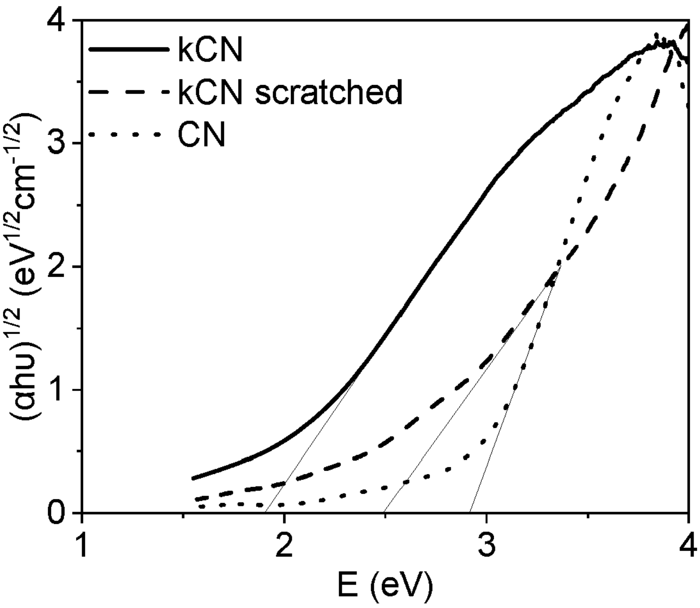
4
3
2
1
0
$(\alpha h\upsilon)^{1/2}$ $(eV^{1/2}cm^{-1/2})$
kCN
kCN scratched
CN
1
2
3
4
E (eV)

Europäisches Patentamt
European Patent Office
Office européen des brevets

# EUROPEAN SEARCH REPORT

Application Number
EP 22 15 1236

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | QIN JIANI ET AL: "Direct growth of uniform carbon nitride layers with extended optical absorption towards efficient water-splitting photoanodes", NATURE COMMUNICATIONS, vol. 11, no. 1, 1 December 2020 (2020-12-01), XP055936485, DOI: 10.1038/s41467-020-18535-0 Retrieved from the Internet: URL:https://www.nature.com/articles/s41467-020-18535-0.pdf> * abstract, Preparation and characterisation of CNT films, PEC performance of electrode * ----- | 1-15 | INV. C01B21/06 H01M4/88 H01M4/90 H01M4/96 H01M14/00 |
| X | CN 112 071 463 A (UNIV SHAANXI SCIENCE & TECH) 11 December 2020 (2020-12-11) * figure 5; examples 1-3 * ----- | 1-15 | |
| A | EP 3 312 139 A1 (LG CHEMICAL LTD [KR]) 25 April 2018 (2018-04-25) * example all * ----- | 1-15 | TECHNICAL FIELDS SEARCHED (IPC) C01B H01M |

The present search report has been drawn up for all claims

1

| Place of search | Date of completion of the search | Examiner |
|---|---|---|
| The Hague | 30 June 2022 | Mattheis, Chris |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 22 15 1236

This annex lists the patent family members relating to the patent documents cited in the above-mentioned European search report. The members are as contained in the European Patent Office EDP file on
The European Patent Office is in no way liable for these particulars which are merely given for the purpose of information.

30-06-2022

| Patent document cited in search report | Publication date | Patent family member(s) | Publication date |
|---|---|---|---|
| CN 112071463 A | 11-12-2020 | CN 112071463 A | 11-12-2020 |
| | | US 2022073349 A1 | 10-03-2022 |
| EP 3312139 A1 | 25-04-2018 | CN 108137324 A | 08-06-2018 |
| | | EP 3312139 A1 | 25-04-2018 |
| | | JP 6727666 B2 | 22-07-2020 |
| | | JP 6862527 B2 | 21-04-2021 |
| | | JP 2018526310 A | 13-09-2018 |
| | | JP 2020040879 A | 19-03-2020 |
| | | KR 20170138855 A | 18-12-2017 |
| | | US 2018212248 A1 | 26-07-2018 |
| | | WO 2017213325 A1 | 14-12-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 20180433829 A
- WO 2019229255 A


### Non-patent literature cited in the description


- **J. QIN ; J. BARRIO ; G. PENG ; J. TZADIKOV ; L. ABISDRIS ; M. VOLOKH ; M. SHALOM.** *Nature Communications,* 2020, vol. 11, 4701
- **N. KARJULE ; J. BARRIO ; L. D. XING ; M. VOLOKH ; M. SHALOM.** *Nano Lett,* 2020, vol. 20, 4618-4624
- **H.G. ROTH ; N.A. ROMERO ; D.A. NICEWICZ.** *Synlett,* 2016, vol. 27, 714-729
- **SCOFIELD, J. H.** Hartree-Slater Subshell Photoionization Cross-Sections at 1254 and 1487ev. *J Electron Spectrosc,* 1976, vol. 8, 129-137
- **ZANATTA, A. R.** Revisiting the optical bandgap of semiconductors and the proposal of a unified methodology to its determination. *Scientific Reports,* 2019, vol. 9, 11225
- *Nature Mater,* 2016, vol. 15, 1084-1089